# EUROPEAN PATENT APPLICATION

(11) **EP 2 339 084 A2**
(43) Date of publication of application: **29.06.2011**
(21) Application number: 10251476.7
(22) Date of filing: 20.08.2010
(51) Int. Cl.: E04C 2/08, E04C 2/32

(54) **Lighting and shade components for building exteriors**

(30) Priority: 23.12.2009 US 646192
(71) Applicant: SDK, LLC, La Crosse, WI 54603 (US)
(72) Inventor: Bear, Kurtis D., La Crescent Minnesota 55947 (US)
(74) Representative: Charig, Raymond Julian

(57) **Abstract**

A panel and panel systems are described herein and can include a rigid panel that includes a plurality of apertures and an undulating pattern. The panel acts to block sunlight and may otherwise protect the area behind the panel. In an example, the panel is fixed in a spaced apart relation to a building. The panel or panels block a portion of the direct sunlight to assist in the environmental control of the building. The panel can be strong enough to further protect the building from weather damage or other damage. A lighting system illuminates the exterior of the panel. The lighting system can be mounted on the support for the panels or to the panels themselves. The lighting system can further be controllable to illuminate a pattern on the panels. The lighting control system can control intensity and color of the lights on the panels. The undulating pattern on the panels can provide further lighting effects. The lighting system can also correct for the undulating pattern on the panels.

## Description

### FIELD OF THE INVENTION

The present description is directed to lighting and shade components for building exteriors, and more specifically, to an exterior panel with lights for a building.

### BACKGROUND

Commercial buildings such as office buildings or apartments are expensive to build, maintain, and repair. The exterior of buildings can be damaged by weather or people. Other costs associated with buildings include temperature control. It is further desired to light buildings for safety and aesthetic reasons.

### SUMMARY

An aspect of the present disclosure is a building component that protects an adjacent location, such as a building, from sunlight or other hazards and provides an exterior lighting system. The component can be a panel that includes a body having a height and a width, a plurality of apertures in the body, and a series of undulations in the body, at least one of the undulations including a peak extending in a width direction. In an example, each of the undulations includes a peak extending in the width dimension and the undulations creating a repeating peak and valley pattern in the vertical direction. In an example, the plurality of apertures is parallelograms that include a corner at a respective one of the peaks of the undulations. In a further example, the plurality of apertures includes a corner at respective valley of the undulation. In a further example, the plurality of apertures defines an open area in the body in the range of about 40% to about 70%. In an example, the series of undulations include at least ten undulations in a height direction. In an example, the series of undulations form an angle from a peak to a valley up to an adjacent peak in a range of about 150 degrees to 170 degrees. In an example, the series of undulations form an angle from a peak to a valley up to an adjacent peak of about 160 degrees. In an example, the body includes a solid outer perimeter free of apertures. In an example, the body has a parallelogram shape and connection points at at least one of the corners. The lighting system is used to light the panel or a plurality of panels.

In a further aspect of the present disclosure, any of the above examples can be part of a building system or a building that include a wall, an exterior connection system fixed to the wall, and a panel system connected to the exterior connection system. The panel may include any of the above examples or other details recited herein.

### BRIEF DESCRIPTION OF DRAWINGS

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.
FIG. 1 is a perspective view of a panel according to an example of the present invention;
FIG. 2 is a side view of a panel according to an example of the present invention;
F1G. 3 is a top view of a panel according to an example of the present invention;
FIG. 4 is top view of a system according to an example of the present invention;
FIG. 5 is view of a system according to an example of the present invention; and
FIG. 6 is view of a building according to an example of the present invention.
FIG. 7 is a schematic view of a panel system according to an example of the present invention.
FIGS. 8A, 8B, and 8C are views of a light device for a panel system according to examples of the present invention.
FIG. 9 is a schematic view of a light system according to an example of the present invention.
FIG. 10 shows a view of a building system with the panel system and lighting system according to examples described herein
FIG. 11 shows a schematic view of the controller according to examples of the present invention.
FIGS. 12A-12C shows a lighting effect on a panel system in examples of the present invention.

### DETAILED DESCRIPTION

The following detailed description includes references to the accompanying drawings, which form a part of the detailed description. The drawings show illustrations in accordance with example embodiments. These example embodiments, which are also referred to herein as "examples," are described in enough detail to enable those skilled in the art to practice the present subject matter. The embodiments can be combined, other embodiments can be utilized, or structural, logical and electrical changes can be made without departing from the scope of what is claimed. The following detailed description is, therefore, not to be taken in a limiting sense, and the scope is defined by the appended claims and their equivalents.

In this document, the terms "a" or "an" are used, as is common in patent documents, to include one or more than one. In this document, the term "or" is used to refer to a nonexclusive "or," such that "A or B" includes "A but not B," "B but not A," and "A and B," unless otherwise indicated. Furthermore, all publications, patents, and patent documents referred to in this document are incorporated by reference herein in their entirety, as though individually incorporated by reference. In the event of inconsistent usages between this document and those documents so incorporated by reference, the usage in the incorporated reference(s) should be considered supplementary to that of this document; for irreconcilable inconsistencies, the usage in this document controls.

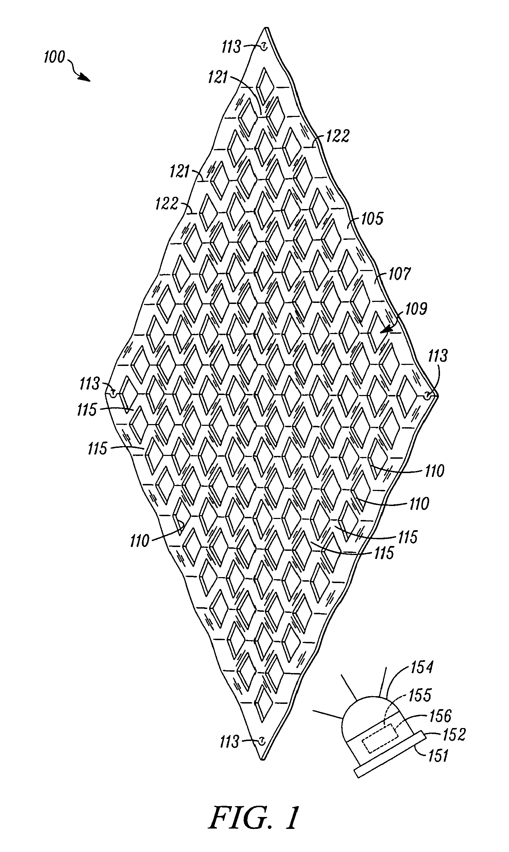

FIG. 1 shows a panel 100 for use in construction of buildings with a light system 150. The panel 100 can also be adapted to be used as a protective device for the exterior of a building. Panel 100 has a solid, continuous body 105. The body 105 made of a metal in an example. In an example, the body 105 has a thickness of less than 1/2 inch. In a further example, the body 105 has a thickness of about 1/4 inch. In a further example, the body 105 has a thickness in the range of about 3/8 inch to about 1/8 inch, plus or minus 1/16 inch. The body 105 has a parallelogram shape with a first dimension and a second dimension. In an example, the first dimension is in the range of about 10 feet to 15 feet and the second dimension is about 6 feet to about 8 feet. In the embodiment, shown in FIG. 1, the panel body has a rhombus or diamond shape with the first dimension being the height and the second dimension being the width. In a specific example, the panel is about 12 1/4 feet in height and about 7 and 1/4 feet in width. In an example, the body has a thickness of greater than 3/16 inch. In a specific example, the body has a thickness of 1/4 inch.

The body 105 is defined by a continuous peripheral band 107 and an interior portion 109. The band 107 is a continuous strip of material, such as a metal. The band has a width of about 4 inches in an example. The width of the band 107 can be in a range of about 1 inch to about 6 inches. At various locations in the band 107, attachment points 113 are provided. These attachment points 113 can be through holes for receiving fasteners, such as bolts, screws, and rivets. In other examples, the attachment points 113 are adapted to receive other fasteners types, such as clamps, adhesives, etc.

The interior portion 109 includes a plurality of apertures 110 extending through the body 105. The plurality of apertures 109 are aligned in rows and columns. In an example, the number of rows equals the number of columns. In the FIG. 1 illustrated example, there are eleven rows and columns. The number of rows and columns of apertures may depend on the desired amount of light to be blocked by the panel. In an example, the apertures are arranged in equal rows and columns of nine or seven. However, in other example, there may be a non-equal number of rows and columns. In a further example, there are 6 or 7 rows and 5 or 6 columns of apertures. The interior body portion 109 includes resembles a web of connecting strips 115 with some strips extending in a first direction and other strips extending in a second direction. In the illustrated example, the strips in the first direction extend in the same direction as the height of the panel. The strips in the second direction extend in the same direction as the width of the panel. Accordingly, when in a plan view, the first direction strips and the second direction strips are perpendicular to each other. In other examples, the various strips need not be perpendicular to each other but can be at various angles, e.g., greater than 45 degrees and less than 90 degrees. The strips 115 have the same thickness as the band 107.

The panel 100 further includes an undulating pattern in the body 105. The undulation patter creates peaks 121 and valleys 122 in the body 105. At least one peak is aligned at one of the corners of the apertures 110 or at the intersection of the strips 115. The peaks 121 and valleys 122 alternate in an example. The peaks 121 and valleys 122 alternate along the entire height of the panel 100. The apertures 110 extend on two adjacent webs such that the aperture extends onto both an upslope and a downslope of a peak.

The lighting system 150 includes a light 151 comprising a base 152 on which is mounted a light source 154. Electrical circuit 155 is within the base 152 and is electrically connected to light source 154. An electrical conductive wire 156 connects the electrical circuit 155 to a remote controller or other electrical circuits (not shown in FIG. 1). The base 152 can be fixed to the panel body 105 or to a bracket supporting the panel body to support the other components of the light source. The base 152 can be adjusted to direct light from the light source to one or a plurality of panel bodies 105. The lighting system 150 further includes a housing in which electronics are housed or enclosed that can control the light source 154. The light source 154 can be an incandescent light source or a light emitting diode. The light source 154 can be controlled by a remote controller that sends electrical signals to the circuitry in the lighting system 150. Light source 154 can further have a lens that focuses the light from the light source on the panel. This will reduce indirect light and hence, reduce light pollution from the light source. In an example, part of the lens is opaque so that light remains focused on a single panel and not on an adjacent panel that is not being lit by the specific light source. In an example, the lens can filter light to assist with illuminating a specific pattern on the panel and, hence, on the entire building panel system. The lens can further seal the light sources to protect the light source from the weather. In addition to a lens, reflectors can be positioned adjacent the light source 154 to direct light toward a target panel and block light from illuminating non-target panels.

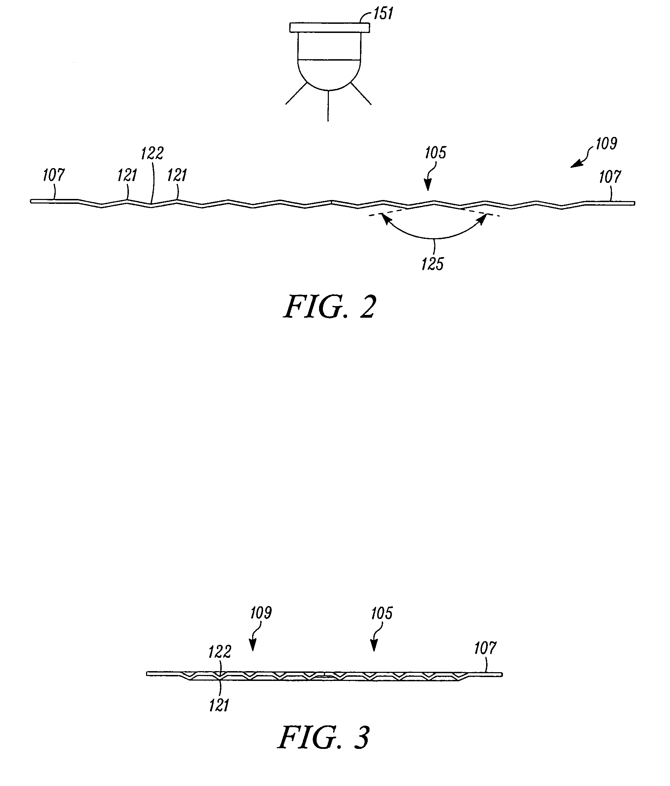

FIG. 2 shows a side view of the undulating pattern of the panel 100 with a light 151, which can be part of the light system 150 discussed herein. FIG. 3 shows a top end view of the undulating pattern of the panel 100. While the light source is not shown in FIG. 3, a light source as described herein can be used with the panel 100 shown in FIG. 3. In these views it is shown that the peaks 121 and valleys 122 extend through the band 107 to the edge of the panel body 105. An angle 125 is formed from an adjacent peak 121 to adjacent peak 121 with a valley 122 forming the vertex. It will further be recognized from FIG. 2 that a peak 121 on one face of the panel body 105 is a valley on the other face. The angle 125 is in the range of about 175 degrees to about 145 degrees. In an example, the angle 125 is in the range of about 170 degrees to about 150 degrees. The angle 125 is in the range of about 165 degrees to about 155 degrees. In an example, the angle 125 is about 160 degrees. The term about in the present paragraph refers to at least +/- one degree or at least +/- 0.5 degree. Moreover, there are a plurality of peaks 121 in the panel body 105, e.g., at least 3, at least 5, at least 8, or 10 or more peaks in a panel body. In an example, there are six peaks in the panel body 105. As a peak 121 on one face is a valley on the other face, there are an equal number of peaks and valleys from face to face. The depths of the peaks and valleys can be changed to capture and reflect various amounts of light from the lighting system 150.

The lighting system 150 illuminates the panel 100 and interacts with the undulating pattern of the panel to create a lighting effect. Across the entire panel system, many panels can attach to one another or be adjacent to on another, the angle 125 of such panels can be unique to create various images and interact with light from both the sun and other sources. The angle 125 can be unique to the path of the sun for a given location (latitude & longitude) of the building to optimize energy usage and visual appeal. In this example all elements of panel 100 may be designed specific to the sun path over the course of a year to achieve the functional and aesthetic design intent. Moreover, the number and size of the apertures 110 in a panel and the angle 125 create a certain lighting effect. In one example, adjacent panels can have different angles 125 or different apertures 110 to create differing lighting effects on the outside of a building.

The panel 100 for ease of construction, durability, and strength is free from glass or polymers in the apertures and in the remaining body 105. The apertures are therefore through holes that allow light to pass through the panel 100. The angle 125 also assists in defining how much light is reflected. The angle 125 also defines wherein the light is reflected. The interior web of the panel body 105 and the peripheral band 107 block some of the light and reflect it away from the back side of the panel. When the panel 100 is mounted in front of a building wall only a portion of the available sunlight directly impinges on the building itself. In an example, the apertures 110 create a panel 100 that has an open area of about 43%. In an example, the open area of a panel is in the range of about 40-70%. In an example, the open area of a panel is in the range of about 45-60%. The amount of panel open area depends on the application of the panel. For example, in a warm climate, e.g. tropics or subtropics, such as Saudi Arabia, where it is desirable to keep buildings cooler during the daylight, a lower open area may be used to block more sunlight from impinging on a building. Examples of such an open area are 45% or less. In other applications of the present panel 100, it may be desirable to have more open area as the panel is adapted to protect the building from catastrophic events, such as severe weather, e.g., hurricane, typhoon, tornado, tsunami, etc. or human caused damage, e.g., riot, military action, etc. These applications may have an open area of 70% or less. In cooler climates, i.e., 45 degrees or greater north or south of the equator, there is a tradeoff in the amount of sunlight that is designed in the summer versus the winter. The undulations may assist in allowing sunlight from lower elevations (winter sunlight) into the building while blocking light at higher elevations (summer sunlight). The webs in the panel 100 act to cover a portion of the aperture at higher inclinations and thus may block greater sunlight in summer than in winter.

To fabricate the panel 100, a continuous sheet of material, such as a metal as described herein, is cut into individual panels 100. The apertures 110 are cut or punched into the interior body portion 109. The outside edge is left whole to form the band 105. If needed, the attachment points are also punched or cut in the area of the band 105. Various methods of cutting can be used, such as water jet, plasma, laser, etc. Thereafter, the panel 100 is placed in a press to form the undulation pattern, e.g., the peaks and valleys, in the entire body 105, i.e., the band 105 and interior body portion 109. In another embodiment, the panel 100 is roll formed after the apertures 110 are punched to form the undulation pattern.

In an example, after the panel 100 is formed the base 152 is fixed to the panel 100. The base 152 is then an integrated part of the panel 100. As such the base 152 is installed at the building site at the same time the panel 100 is installed. This can insure that the base 152 and panel 100 are positioned correctly for illumination of the panel.

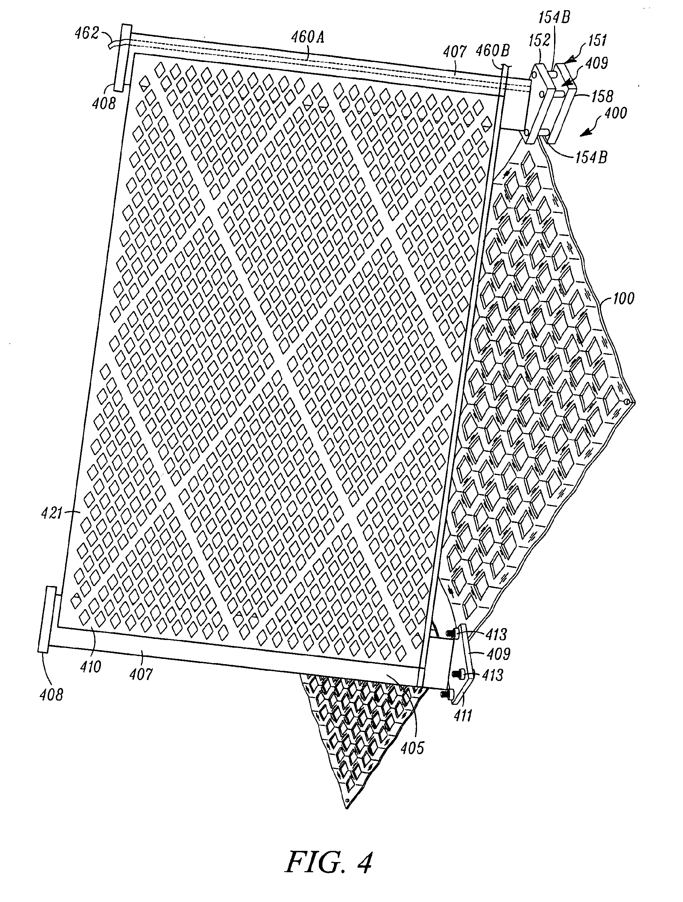

FIG. 4 shows a top view of a panel system 400 that includes a panel 100, a support system 405, a walkway 410, and a lighting system 150. The panel system 400 is adapted to be attached to a building with the panel 100 being spaced from the building. The support system 405 includes an elongate brace 407 that has a first end fixed to a connector 408, which connects to a building (not shown in FIG. 4), and a second end that supports a fastener assembly 409, which is to support the panel(s) 100 and lighting system. Connector 408 can be a plate or elongate structure to reach the building. Brace 407 includes a conduit 460A includes an electrical conduit 460A in which electrical wiring 462 can be housed. The electrical wiring 462 electrically conducts electrical signals to light 151 from a remote controller (not shown in FIG. 4). Fastener assembly 409 is to fix to a connection point of the panel 100. In the illustrated example, the fastener assembly includes a plate 41 to which is fixed a plurality of fasteners 413. ln an example, the fastener assembly 409 is in the shape of a plus sign (+) with a connection point at the distal end of at least two and, preferably each cantilevered arm. The plus sign design includes a central body that provides a connection to a support and the arms that extend therefrom to provide the connection points to the panel. Each arm can connect to one panel. At least fastener 413 is fixed to a connection point on the panel 100. The fastener 413 can be a bolt, screw, or rivet. The fastener 413 has a portion engaging the panel that cannot be released from the outside of the panel 100 remote from the support system. The panel 100, as shown, has a parallelogram shape, here a rhombus, with connection points at each vertex. One connection point is connected to a respective plate 411 with four different panels 100 connected to each plate. Thus, a panel 100 with four vertices is fixed to the support system 405 at four connection points. The plate 411 can have different shapes to meet certain design aspects of the building, e.g., a rhombus, oval, circular, or other polygon shape.

Each light source of the lighting system 150 is fixed to the panel 100 or the support system 405. In an example, the same fasteners 413 that fix the panel 100 to support system 405 can be used to fix the light source to the panel. The light source can be positioned at the bottom of each panel and positioned to direct light upwardly onto the respective panel. The light source can further selectively direct light to any of panels connected to the connection point. That is, the light source can illuminate up to four panels that are fixed at the connection point. Moreover, the light source can direct different light to different panels. Accordingly, any individual panel can be illuminated from any direction and with a color that can be the same as from other directions or can be a different color. Each panel can be illuminated with a color different than its neighboring panel(s).

The walkway 410 includes one deck section 421 extending between and fixed to two adjacent braces 407. An end of the deck section 421 extends onto half or less of the top surface of the brace 407 to allow adjacent deck sections to be fixed to the same brace 407. The deck section 421 has a web interior with apertures therethrough to allow moisture, air, and light to pass through the deck section. Various patterns can be used for the web interior of the deck section. Any pattern with apertures therein to allow moisture to travel through the deck section 421 can be used. In another example, a solid deck section is used. The deck sections 421 can further include electrical wiring conduits 460B in which wiring from a power source or a lighting controller to the light sources. In an example, the conduits align with conduits in brackets that extend from the building to the walkway or outwardly to the panel.

In an example, the panel 100 can include an electrical conduit that houses electrical wiring for the lighting system 150. In this example, the lighting system 150 can be integral with the panels 100 such that the lights 151 and required wiring can be installed with the panels and need not rely on special support systems to provide electrical communication with the lighting system.

In the illustrated example, the light 151, which is part of a lighting system 150, includes a base 152 connected to the brace 407. While shown in only one location in FIG. 4, it will be understood that the lighting system 150 can include a plurality of light sources 151 on a plurality of braces 407 to illuminate a plurality of panels 100. A plurality of light sources 154B is provided on the light base 152. A cover 158 is provided to block light from being transmitted perpendicularly from the panels and direct light toward the panels. In an example, additional reflectors can be positioned around the light sources 154B to direct light toward the target panel. Each of the light sources 154B can be individually controlled to provide a select intensity and/or color of light directed to a target panel or panels. In an example, the light 151 can illuminate more than one target panel.

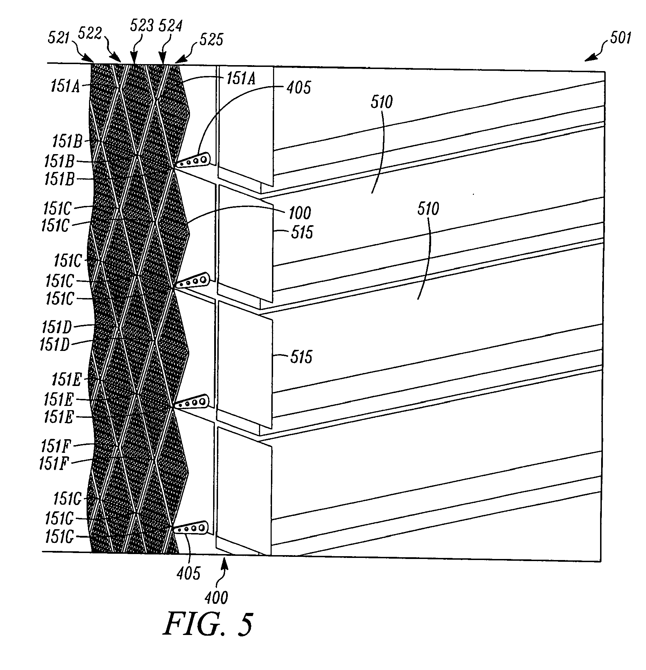

FIG. 5 shows a plurality of panels 100 with light system 150 supported by a support system 405 on one side of a building 501. The building 501 is a multi-floor 510 commercial building such as an office building, apartment building, or an industrial building. The building 501 can be a high rise building of the design with an interior load bearing frame, e.g., steel cages, or masonry or concrete structures, that support the weight of the building. Building 501 includes exterior walls 515 that define the interior space on each floor 510. The exterior walls 515 can be supported by the interior frame. The support system 405 extends outwardly of the exterior wall 515 to support the panels 100 at a position remote from the building's exterior wall 515. At least some parts of the support system 405 include electrical conduits to support wiring for the light system. A walkway 410 can be positioned in the space between the exterior wall 515 and panels 100. However, a walkway is not required at each floor. The walkway 410 can further be a temporary structure that can be inserted and removed from the support system 405 as needed, for example, if maintenance is required.

The panel system 400 is shown on only one side of the building, nonetheless, it will be recognized that the panel system can extend around the entire building 501, e.g., all sides. It is desired that the panel system face at least the southern direction to reflect light from the exterior of the building. In another example, the panel system may face the direction that severe weather may impact the building 501. The panel system 400 can extend from the ground to the top of the building 501 in one example. In another example, the panel system 400 does not cover each floor, e.g., the first floor or lower floors may not be covered. Due to the modular nature of the panels 100 in the panel system 400, some panels can be left off and others can be partial panels, here, triangle shaped panels so as not to cover entire floors where it is desired to receive full sunlight. The panels 100 are aligned with windows on the building 501 as well as solid walls to assist in blocking sunlight and keeping the building cool. In an example, the panels 100 can be removed from the support and reversed and reattached. This may extend the life of any coating on the panels 100. In a further example, different coatings can be applied to the two sides of the panel. The panels can be reversed as desired to change the exterior look of the building or the look of the panel system from inside the building.

The lighting system 150 includes a plurality of lights 151, that are set into rows designated by 151A, 151B, 151C, 151 D, 151E, 151F, 151G, etc. A first plurality of lights 151 is positioned at the level of the brackets 405. A second plurality of lights 151 are positioned intermediate the brackets 405. A plurality of light columns 521, 522, 523, 524, 525, etc. are provided. As the lights 151 are arranged in rows and columns allows they are individually addressable by a controller (not shown in FIG. 5) such that a light 151 can illuminate a single panel. The controller can selectively illuminate single panels using individually addressable lights such that the panel can be a pixel in an image. The controller can then use the entire panel structure to construct an image on the exterior of the structure.

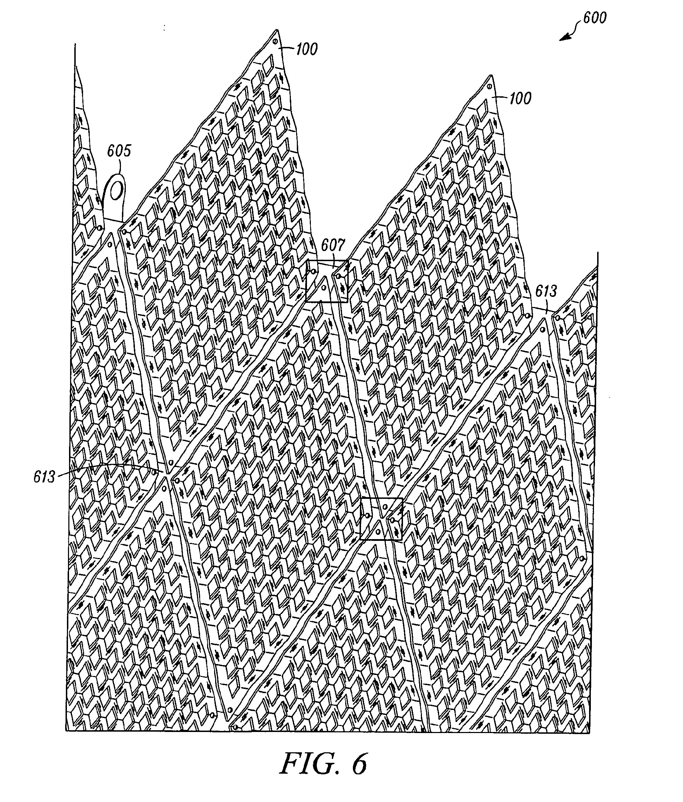

FIG. 6 shows a free standing panel system 600 that includes a plurality of panels 100 fixed to a support system 605. The support system 605 is an essentially free standing system that can have some connection points to the building. The support system 605 does not include a walkway, optionally. Support system 605 includes a plurality of metal bars 607 that extend vertically and horizontally to form a frame on which the plates 613 are fixed. The plates 613 can be the same as plates 413 described herein. The panels 100 are fixed to the frame of bars 607, for example, at plates 613. The system 600 can be placed adjacent a location that needs to be shaded or protected as a free standing structure.

The panels systems 400 and 600 are fixed in place, that is, the panels remain in place once installed. The individual panels 100 in the systems 400, 600 are not slidable to control the amount of protection provided by the panel system. Accordingly, the amount of protection and strength of panel is calculated before installation and the panels are manufactured accordingly with a certain gauge of metal, size and shape of apertures, number of apertures, and the pitch of the undulations. The panel system 400 or 600 acts to block some sunlight from the building to assist in reducing cooling costs, while at the same time allowing some sunlight through to enhance the environment for the people working in the building and not require the building to be completely lit by artificial lighting. A light system 150 is provided with lights 151 at the bars 607 or plates 613. In an example, the lights are fixed to the plate 613. While only showed at some plates, it will be understood that each plate 613 can have a light 151 mounted thereto.

As shown in FIGS. 4, 5, and 6, the undulation pattern in the panel body 105 undulates in the vertical direction of the panel in its installed state. The peaks and valleys extend in a horizontal line across the entire width of the panel in its installed state.

In a further example, the panels 100 of a system (e.g., 400 or 600) installed on a building are of different dimensions to create different effects and protections to the building. The lighting system 150 can provide different lighting effects that can be controllable. In an example, a plurality of panels 100 has a plurality of heights and widths. In an example, the open areas of different panels (percentage of aperture area as compared to the area of the whole of the panel) are different, e.g., a first group of panels can be solid, and i.e., no open area and other groups of panels can have open areas as described herein. Accordingly, it can be said that a first group of panels has a first property and a second group of panels has a second property. The first property is different from the second property. The differing properties can be finishes as well as size of the panels or size of the apertures.

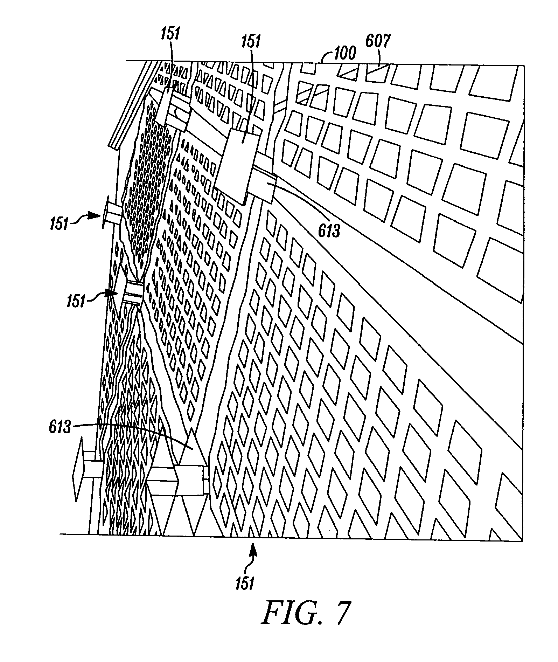

FIG. 7 shows a panel system with lighting system 150 illuminating panels 100. The undulating pattern of the panels 100 reflect the light from lights 151 in a similar manner to the reflection of the sunlight. However, the lights 151 are positioned close to the panel 100 such that the light from lights 151 impinge the panel at a more severe angle, e.g., zero to five degrees, than the sunlight impinges the panel. As such, the artificial light from lights 151 provide a different lighting effect than natural light.

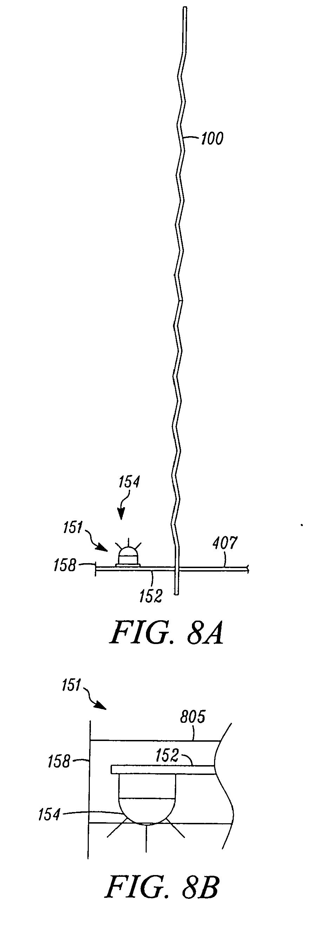

FIG. 8A shows an elevational view of a panel 100 and a light 151. In an example, the support structure of the light is fixed to the panel 100. The panel 100 in turn is fixed to a brace 407. The brace 407 can be a rigid metal 1-beam that includes an electrical conduit to enclose wiring. In an example, brace 407 is a rigid metal pipe or roll formed support each of which includes a hollow interior. The wiring for the light 151 can be positioned in the interior of a brace with the hollow interior. A cover 158 is positioned outside (posterior) the light relative to the panel and the region shielded by the panel 100. The light 152 can be a directed light that illuminates a target panel or group of target panels with minimal light spill over onto other surfaces.

FIG. 8B shows a schematic view of a light 151 including a base 152 on which is fixed a light source 154. A cover 158 is positioned outwardly of the light source 152 relative to a panel (not shown in FIG. 8B). A reflector 805 is provided such that light will not spill from the light source in the direction into the paper in FIG. 8B. Reflectors 805 can be positioned as needed to direct light and connected to the cover 158, a base 152, a brace or the panel.

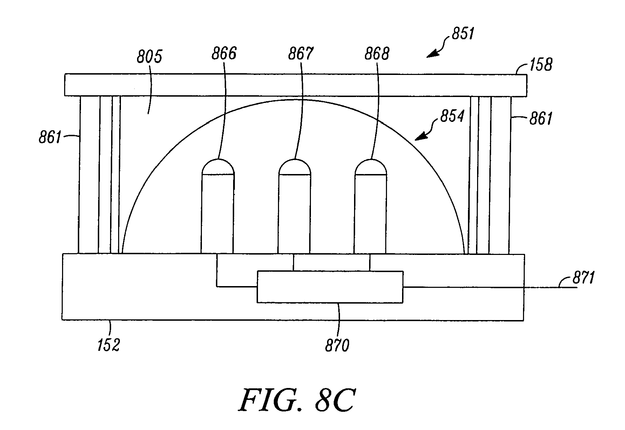

FIG. 8C shows a light 851 with a base 152, a light source 854 and a cover 158. The cover 158 is held in place by a plurality of columns 861. A reflector 805 is positioned on three sides of the light 854 such that light is directed in a single orthogonal direction toward a panel (not shown in FIG. 8C). The light source 854 includes a plurality of light emitters 866, 867, 868, which are connected to a control circuit 870, which is in turn received electrical control signals and power over wire 871. The light emitters 866, 867 and 868 can each emit different light spectra and are controllable to together emit a select light color.

The light unit 851 can include Light Emitting Diodes (LEDs) to provide illumination of a single panel or a group of panels. LEDs produce light of relatively narrow spectra as a result the bandgap of the semiconductor material used to fabricate the LED. Each light emitter 866, 867, 868 respectively can be red, green, and blue (RGB) LEDs to produce mixed (e.g., white or other colored) light. Slight differences in the relative amounts of each color of the RGB LEDs used in the light unit 851 can emit a color shift in the light by controlling output of each RGB LED. In an example, careful control of spectral content, feedback control mechanisms can be used to ameliorate differences between LEDs in different light units. Such differences may be due to the aging of the LEDs, variations in temperature, or shifts in drive currents, which can occur over the distance from the controller to each light unit positioned adjacent the panels on a building exterior. Moreover, LEDs manufactured by nominally identical processes can have slight variations compared to other LEDs. One example of controlling LEDs can be found in U.S. Patent No. 7,348,949, which is hereby incorporated by reference for any purpose.

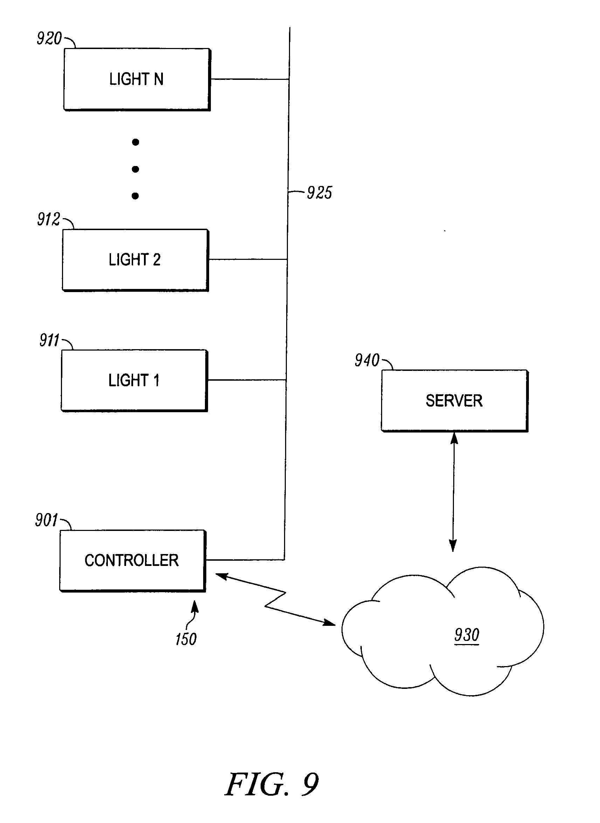

FIG. 9 shows a light system 150 including a controller 901 in communication with a plurality of lights 902, 903, ... 920 over a bus 925. The number of lights 902, 903, ...920 equals the number of panels that will can be illuminated by light system. The controller 901 can communicate over a computer network 930 to a remote server 940. The controller 901 can include memory to store programs that execute certain instructions stored therein to illuminate the panels. The memory can further store images that can be formed on the panel system by illumination that are accessed by the program. A processor accesses the programs for execution on the processor and requests data from the memory for execution in the program. Controller 901 further is connected to a power source, e.g., the electrical power grid. Using the stored program the controller sends control signals on the bus 925 to the lights 901-920. The control signals are received at the lights 901-920. Lights 901-920 illuminate the panels based on the received control signals. The control signals can control the color, intensity, hue, on, off, or other status of the lights 901-920. The controller can further include an I/O port to communicate over the network 930.

The controller 901 can further include a clock or other timing signal source that can indicate to the controller that the lighting system should be turned on or off. In an example, the controller turns on the lighting system at dusk or shortly after dusk. The memory in the controller can store the time of dusk for each day of the year at the specific latitude whereat the building is positioned. The controller can further load different images based on the day of the week, time of day, time of year, or holidays, etc. This information can be stored in memory. In an example, this information can be updated or downloaded over network 930 from a remote server 940.

Data communication as described in Figure 9 couples the various devices together. The network 930 is preferably the Internet, but can be any network capable of communicating data between devices can be used with the present system. In addition to the Internet, suitable networks can also include or interface with any one or more of, for instance, an local intranet, a PAN (Personal Area Network), a LAN (Local Area Network), a WAN (Wide Area Network), a MAN (Metropolitan Area Network), a virtual private network (VPN), a storage area network (SAN), a frame relay connection, an Advanced Intelligent Network (AIN) connection, a synchronous optical network (SONET) connection, a digital T1, T3, E1 or E3 line, Digital Data Service (DDS) connection, DSL (Digital Subscriber Line) connection, an Ethernet connection, an ISDN (Integrated Services Digital Network) line, a dial-up port such as a V.90, V.34 or V.34bis analog modem connection, a cable modem, an ATM (Asynchronous Transfer Mode) connection, or an FDDI (Fiber Distributed Data Interface) or CDDI (Copper Distributed Data Interface) connection. Furthermore, communications can also include links to any of a variety of wireless networks, including WAP (Wireless Application Protocol), GPRS (General Packet Radio Service), GSM (Global System for Mobile Communication), CDMA (Code Division Multiple Access) or TDMA (Time Division Multiple Access), cellular phone networks, GPS (Global Positioning System), CDPD (cellular digital packet data), RIM (Research in Motion, Limited) duplex paging network, Bluetooth radio, or an IEEE 802.11-based radio frequency network. The network 110 can further include or interface with any one or more of an RS-232 serial connection, an IEEE-1394 (Firewire) connection, a Fiber Channel connection, an IrDA (infrared) port, a SCSI (Small Computer Systems Interface) connection, a USB (Universal Serial Bus) connection or other wired or wireless, digital or analog interface or connection, mesh or Digi® networking.

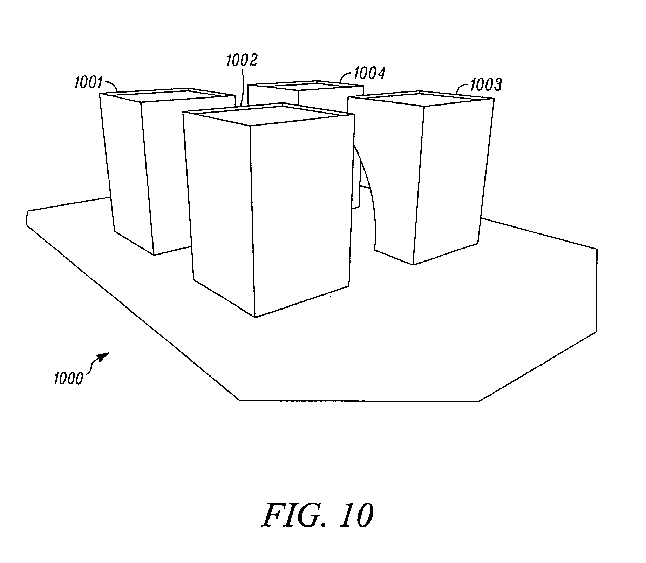

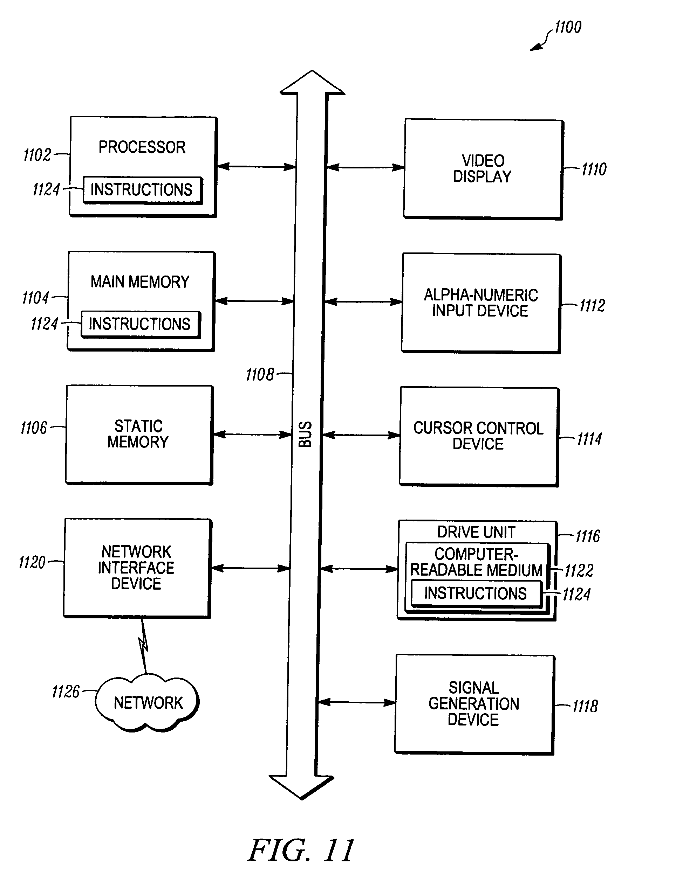

FIG. 10 shows a building complex 1000 including for buildings 1001, 1002, 1003, and 1004 that include a panel system 400 (or 600) and a lighting system 150 as described herein. The four buildings 1001-1004 form a square with only the faces of the buildings 1001-1004 having the panel systems 400 thereon. In an example, the panel system encloses all faces of each building. In a further example, the panel system is mounted to less than all sides of the building(s). In an example, the panel system is mounted to the south side of the building(s) to shield the building from sunlight. In an example, the panel system is mounted to the sides of the building that may face extreme weather, for example, an ocean side that may face a hurricane or a typhoon. In an example, only the panels on the outer faces include the lighting system 150. Alternatively in this example, the lighting system 150 only illuminates that outer faces of the buildings. As used herein with respect to FIG. 11 the term building includes the actual structure and the panel system associated with the structure. Individual panels of the panel system are illuminated with select intensity and/or select color to form a select image on the building. As shown a sword motif extends from a lower corner of a building face to an upper corner of the same face. In an example, the sword motif is similar to the symbol of the Kingdom of Saudi Arabia. The lower part of the building face is illuminated with essentially white light. The sword motif can be in color. The number of panels illuminated with white light is fewer in number. Specifically, the top row of panels only includes two illuminated panels. The controller can send signals to each of the panels on at least one building face to form the lighted image on the building face. While shown with all building sides having a same image, it is within the scope of the present invention for the controller to form different images on any face of any building. In an example, a single controller sends signals to control the illumination and, hence, images on each face of each building.

FIG. 11 show a diagrammatic representation of controller (e.g., 901) as a machine in the example form of a computer system 1100 within which a set of instructions may be executed causing the machine to perform any one or more of the methods, processes, operations, applications, or methodologies discussed herein.

In an example embodiment, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a server computer, a client computer, a personal computer (PC), a tablet PC, a set-top box (STB), a Personal Digital Assistant (PDA), a cellular telephone, a web appliance, a network router, switch or bridge, or any machine capable of executing a set of instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1100 includes a processor 1102 (e.g., a central processing unit (CPU) a graphics processing unit (GPU) or both), a main memory 1104 and a static memory 1106, which communicate with each other via a bus 1110. The computer system 1100 may further include a video display unit 1110 (e.g., a liquid crystal display (LCD), plasma display, or a cathode ray tube (CRT)). The computer system 1100 also includes an alphanumeric input device 1112 (e.g., a keyboard), a cursor control device 1114 (e.g., a mouse), a drive unit 1116, a signal generation device 1118 (e.g., a speaker) and a network interface device 1120.

The drive unit 1116 includes a machine-readable medium 1122 on which is stored one or more sets of instructions (e.g., software 1124) embodying any one or more of the methodologies or functions described herein. The software 1124 may also reside, completely or at least partially, within the main memory 1104 and/or within the processor 1102 during execution thereof by the computer system 1100, the main memory 1104 and the processor 1102 constituting machine-readable media.

The software 1124 may further be transmitted or received over a network 1126 via the network interface device 1120. While the machine-readable medium 1122 is shown in an example embodiment to be a single medium, the term "machine-readable medium" should be taken to include a single medium or multiple media (e.g., a centralized or distributed database, and/or associated caches and servers) that store the one or more sets of instructions. The term "machine-readable medium" shall also be taken to include any medium that is capable of storing, encoding or carrying a set of instructions for execution by the machine and that cause the machine to perform any one or more of the methodologies shown in the various embodiments of the present invention. The term "machine-readable medium" shall accordingly be taken to include, but not be limited to, solid-state memories and optical and magnetic media, and physical carrier constructs.

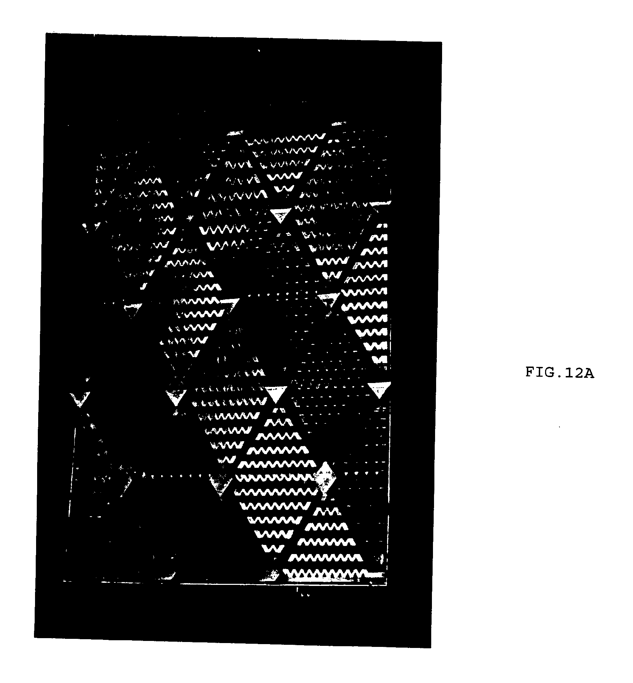

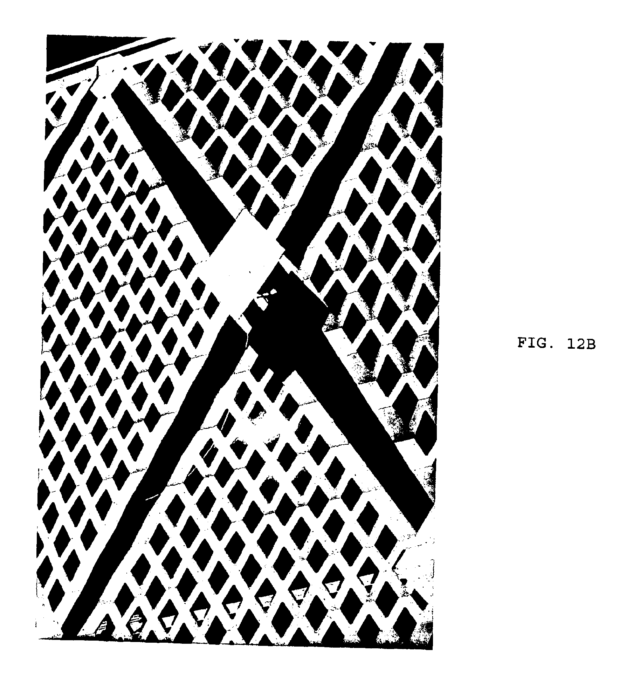

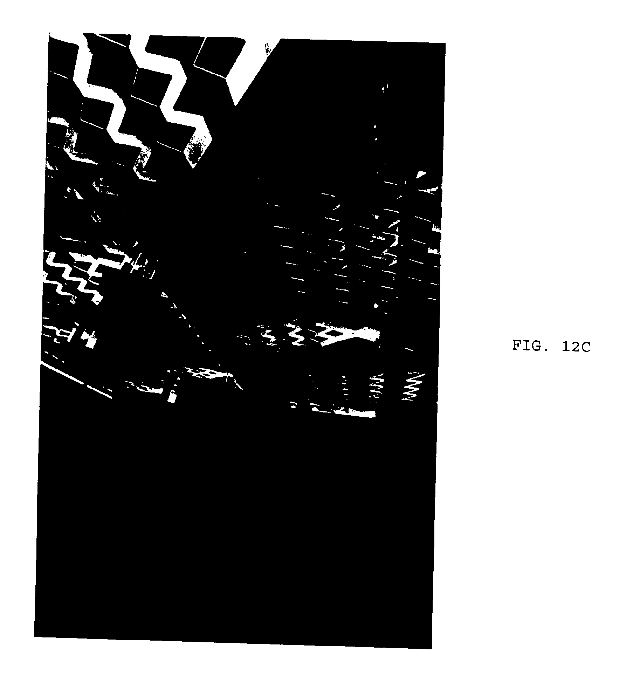

FIGS. 12A-12C show various lighting effects that the lighting system 150 can impart on the panel system 100.

The covers for the lights 151 are shown as flat plates. It is within the scope of the present invention for the cover to have different shapes. In an example, the cover is a pyramid shape or frusto-conical shape that essentially encloses the light with a window that allows the light to escape the cover to illuminate the panel. Accordingly, the cover directs the light to each specific panel and prevents the light from splashing over on to the adjacent panel.

In a further example, the light 151 is positioned at each corner of each panel. Such a light can illuminate any of the adjacent panels. In the examples herein, the light would illuminate up to four panels. Each direction that the light 151 can illuminate can include its own light source, for example, incandescent bulb or LED or LED system.

The panel and light systems as described herein may also be installed inside buildings or around the exterior of the building to divide the interior space for flow control or security. The lighting system can further be used to communicate information such as directional cues for movement of people in the interior space. Moreover, the use of the presently described panels can be used to emphasize sunlight in some regions of a building such as an atrium or the entryway. This may be useful in region that lack sunlight whereby the amount of sunlight in a particular interior volume of the building can be increased by reflecting the light in a certain direction utilizing the pattern in the panels.

The panel system as described herein can provide an effective shading coefficient of at least 50% and about 54%. By implementing the panel system, an average, annual solar heat gain reduction of greater than 70% can be provided. In some examples, heat gain reduction can be above 80% and has been predicted to be at least 86%. Additional reductions in solar heat gains can be achieved with proper positioning of the walkway which will further shade the remaining sunlight passing through the panels. In some examples, direct sunlight can be prevented from impinging on the building while allowing indirect light to enter the building to provide ambient light. The panel system without the walkway can provide a cooling energy reduction of at least 9% and in a specific example of 9.8%. When the walkway is used, the cooling energy reduction can be at least 10%. In an example with the walkway at floor level the cooling energy reduction is at least about 10.5%. In an example with the walkway at window level the cooling energy reduction is at least about 11.8%. The above numbers are believed to be accurate for a climate that receives significant sunlight, such as a Middle Eastern location, northern Africa location, and other tropical locations between the Tropic of Cancer and the Tropic of Capricorn or subtropical regions that experience a significant amount of direct sunlight. Accordingly, the use of the panel and lighting systems as described herein provide a significant energy reduction and can result in an annual reduction in electricity usage in a range of 4% to 7%. Obviously, the use of such a system is an environmentally beneficial technology.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description, with each claim standing on its own as a separate embodiment. The scope of the invention should be determined with reference to the appended claims, along with the full scope of equivalents to which such claims are entitled.

## Claims

1. A building system, comprising:
an exterior connection system fixed to a building wall;
a panel system connected to the exterior connection system, the panel system including a panel that comprises:
a body having a height and a width;
a plurality of apertures in the body; and
a series of undulations in the body, at least one of the undulations including a
peak extending in a width direction; and
a lighting system connected to at least one of the exterior connection system and the
panel system to illuminate the panel.

2. The building system of claim 1, wherein the panel system comprises a plurality of panels, at least one panel comprising:
the plurality of apertures being parallelograms include a corner at a respective one of the peaks of the undulations;
the plurality of apertures include a corner at respective valley of the undulation;
the plurality of apertures define an open area in the body in the range of about 40% to about 70%; and
the series of undulations include at least ten undulations in a vertical direction.

3. The building system of any proceeding claim, wherein the exterior connection system includes an extension that extends outwardly between at least two panels, and wherein the lighting system includes a light source on the extension to illuminate at least one of the panels.

4. The building system of any proceeding claim, wherein the exterior connection system includes a cover that is outwardly of the light source to block light source remote from the panel.

5. The building system of any proceeding claim, wherein the light source is controllable to control the at least one of intensity and color of light that impinges the panel.

6. The building system of claim 5, wherein series of undulations form an angle from a peak to a valley up to an adjacent peak in a range of about 150 degrees to 170 degrees, and preferably, of about 160 degrees.

7. The building system of claim 5, wherein the exterior connection system spaces the vertical panels of the panel system over about two feet from the wall, and the light source about six inches or fewer inches from the panel.

8. The building system of claim 5, wherein the exterior connection system comprises a connector having a specific shape with connection points for a panel at a distal end of each arm.

9. The building system of claim 5, wherein the panel system substantially covers the wall to block a percentage of direct sunlight from the wall.

10. The building system of claim 5, wherein the panel system includes a first group of panels having a first property and a second group of panels having a second property, and wherein the first property is different from the second property.

11. The building system of claim 10, wherein the first group reflects light differently than the second group.

12. The building system of claim 5, wherein the plurality of apertures define an open area in the body in the range of about 40% to about 70%.

13. The building system of claim 5, wherein the series of undulations include at least six undulations in a height direction.

14. The building system of any proceeding claim, wherein the lighting system includes a controller to send control signals to each light that illuminates a single panel.

15. The building system of claim 14, wherein the controller stores a plurality of images that can be formed on the panel system by the lighting system.
